# EUROPEAN PATENT APPLICATION

(11) **EP 4 459 325 A1**
(43) Date of publication of application: **06.11.2024**
(21) Application number: 23918033.4
(22) Date of filing: 06.11.2023
(51) Int. Cl.: G01S 17/88, G01S 7/48

(54) **VEHICLE POSE DETERMINATION METHOD AND APPARATUS, DEVICE, AND STORAGE MEDIUM**

(30) Priority: 21.02.2023 CN 202310144454
(71) Applicant: Guangxi LiuGong Machinery Co., Ltd., Liuzhou Guangxi 545007 (CN)
(72) Inventor: LIU, Ping, Liuzhou, Guangxi 545007 (CN); ZHOU, Wenbin, Liuzhou, Guangxi 545007 (CN); SUN, Jinquan, Liuzhou, Guangxi 545007 (CN); CAI, Dengsheng, Liuzhou, Guangxi 545007 (CN)
(74) Representative: Cabinet Beaumont
(86) International application number: PCT/CN2023/129903
(87) International publication number: WO 2024/174580

(57) **Abstract**

Provided are a method and apparatus for determining a vehicle pose, a device, and a storage medium. The method includes the following: a to-be-processed region corresponding to a first actual positioning mark detected by a vehicle in a target scene at a previous moment is acquired (S 110); a desired positioning mark is set in the to-be-processed region (S 120); laser point cloud data falling within the to-be-processed region at a current moment is acquired (S130); at least one second actual positioning mark is determined according to the laser point cloud data (S 140); a target positioning mark is determined according to the at least one second actual positioning mark and the desired positioning mark (S 150); and pose information of the vehicle is determined according to the target positioning mark (S160).

## Description

The present application claims priority to Chinese Patent Application No. 202310144454.5, filed with the China National Intellectual Property Administration (CNIPA) on Feb. 21, 2023, the disclosure of which is incorporated herein by reference in its entirety.

### TECHNICAL FIELD

Embodiments of the present disclosure relate to the field of automatic control technologies, for example, a method and apparatus for determining a vehicle pose, a device, and a storage medium.

### BACKGROUND

During an unmanned autonomous operation, a movable engineering mechanical device needs to position the position and pose of the movable engineering mechanical device itself in a working scene. Since an outdoor working scene has good global positioning system (GPS) signals, the GPS real-time kinematic (RTK) difference technology is usually adopted for positioning in the outdoor scene. Since an indoor working scene or a semi-indoor working scene does not have good GPS signals, the laser simultaneous localization and mapping (SLAM) technology is usually adopted for positioning in the indoor scene or the semi-indoor scene.

In the laser SLAM technology, a point cloud map is constructed off-line firstly, and a map-based real-time positioning is performed in operation. The real-time positioning is performed in the following two manners. One manner is a laser SLAM positioning method based on a scene point cloud, a registration between a real-time laser point cloud of a driving scene and a map point cloud of the driving scene is relied on to reversely deduce the position and the pose of the self-car. However, in such a manner of purely relying on the registration of the point clouds, the whole SLAM system has poor positioning stability and is difficult to be actually used. Therefore, a second real-time positioning manner, i.e., a laser SLAM positioning method based on a road sign, emerges, in this second manner, some high-brightness reflective panels for a lidar are arranged at multiple key positions in a scene and are referred to as road signs or positioning marks, and positions of multiple positioning marks being detected in the real-time laser point cloud of the driving scene is relied on to reversely deduce the position and the pose of the self-car.

The detection solution using the positioning mark has the following two defects.
(1) In a case where the structure of the working scene is very complex, to adapt to the fact that the road signs can be detected from different directions at an intersection, it is possible that multiple positioning marks are adjacent to each other, and at this time, the phenomenon that a target positioning mark and a non-target positioning mark coexist in a region of interest (ROI) exists, whereby the detected non-target positioning mark may be mistaken as the target positioning mark, resulting in a large positioning deviation.
(2) When other planes with high reflectivity towards the laser point appear beside the positioning marks, for example, the bucket of a loader rises to appear in the field of view of the lidar and is adjacent to the nearby positioning marks, and these high reflective planes may be erroneously detected and mistakenly output as the target positioning mark, thereby resulting in a large positioning deviation.

### SUMMARY

Embodiments of the present disclosure provide a method and apparatus for determining a vehicle pose, a device, and a storage medium, which can improve detection accuracy of a positioning mark, and thus improve detection accuracy of a vehicle pose.

An embodiment of the present disclosure provides a method for determining a vehicle pose. The method includes the following: a to-be-processed region corresponding to a first actual positioning mark detected by a vehicle in a target scene at a previous moment is acquired; a desired positioning mark is set in the to-be-processed region; laser point cloud data falling within the to-be-processed region at a current moment is acquired; at least one second actual positioning mark is determined according to the laser point cloud data; a target positioning mark is determined according to the at least one second actual positioning mark and the desired positioning mark; and pose information of the vehicle is determined according to the target positioning mark.

An embodiment of the present disclosure further provides an apparatus for determining a vehicle pose. The apparatus includes a to-be-processed region acquisition module, a desired positioning mark setting module, a laser point cloud data acquisition module, a second actual positioning mark determination module, a target positioning mark determination module and a pose information determination module. The to-be-processed region acquisition module is configured to acquire a to-be-processed region corresponding to a first actual positioning mark detected by a vehicle in a target scene at a previous moment. The desired positioning mark setting module is configured to set a desired positioning mark in the to-be-processed region. The laser point cloud data acquisition module is configured to acquire laser point cloud data falling within the to-be-processed region at a current moment. The second actual positioning mark determination module is configured to determine at least one second actual positioning mark according to the laser point cloud data. The target positioning mark determination module is configured to determine a target positioning mark according to the at least one second actual positioning mark and the desired positioning mark. The pose information determination module is configured to determine pose information of the vehicle according to the target positioning mark.

An embodiment of the present disclosure further provides an electronic device. The electronic device includes at least one processor and a storage apparatus configured to store at least one program. The at least one program, when executed by the at least one processor, causes the at least one processor to implement the method for determining a vehicle pose described in the embodiments of the present disclosure.

An embodiment of the present disclosure further provides a storage medium. The storage medium includes a computer-executable instruction, where the computer-executable instruction is configured to perform, when executed by a computer processor, the method for determining a vehicle pose described in the embodiments of the present disclosure.

### BRIEF DESCRIPTION OF DRAWINGS

FIG. 1 is a schematic flowchart of a method for determining a vehicle pose according to an embodiment of the present disclosure;
FIG. 2 is a diagram illustrating multiple adjacent second actual positioning marks according to an embodiment of the present disclosure;
FIG. 3 is a diagram illustrating a detection effect of a target positioning mark according to an embodiment of the present disclosure;
FIG. 4 is a diagram illustrating a bucket partial plane appearing in a to-be-processed region according to an embodiment of the present disclosure;
FIG. 5 is a diagram illustrating another detection effect of a target positioning mark according to an embodiment of the present disclosure;
FIG. 6 is a flowchart of another method for determining a vehicle pose according to an embodiment of the present disclosure;
FIG. 7 is a schematic structural diagram of an apparatus for determining a vehicle pose according to an embodiment of the present disclosure; and
FIG. 8 is a schematic structural diagram of an electronic device according to an embodiment of the present disclosure.

### DETAILED DESCRIPTION

Embodiments of the present disclosure will be described in more detail below with reference to accompanying drawings. It is to be understood that the accompanying drawings and the embodiments of the present disclosure are merely used for exemplary purposes and are not intended to limit the scope of protection of the present disclosure.

It is to be understood that steps recited in method embodiments of the present disclosure may be performed in different sequences and/or performed in parallel. Moreover, the method embodiments may include additional steps and/or omit performing the shown steps. The scope of the present disclosure is not limited in this respect. As used herein, the term "include/comprise" and its variants are open inclusive, that is, "including, but not limited to". The term "based on" is "based at least in part on". The term "one embodiment" represents "at least one embodiment". The term "another embodiment" represents "at least one further embodiment". The term "some embodiments" represents "at least some embodiments". Relevant definitions for other terms will be given in the description below.

It is to be noted that the concepts of "first", "second" and the like mentioned in the present disclosure are only used to distinguish between different apparatuses, modules or units, and are not used to limit the order or interdependence of the functions performed by these apparatuses, modules or units.

It is to be noted that a modification as "one" or "multiple/plurality of" mentioned in the present disclosure are intended to be illustrative rather than limiting, and it should be understood by those skilled in the art that the modification as "one" or "multiple/plurality of" mentioned in the present disclosure should be understood as "one or more" unless the context clearly dictates otherwise.

It is to be understood that the data (including, but not limited to, the data itself, acquisition or use of the data) to which this technical solution relates shall follow the requirements of the corresponding laws and regulations and related provisions.

This embodiment may be popularized and applied to a series of unmanned loader products, or may be popularized and applied to unmanned excavators and other unmanned engineering vehicle products.

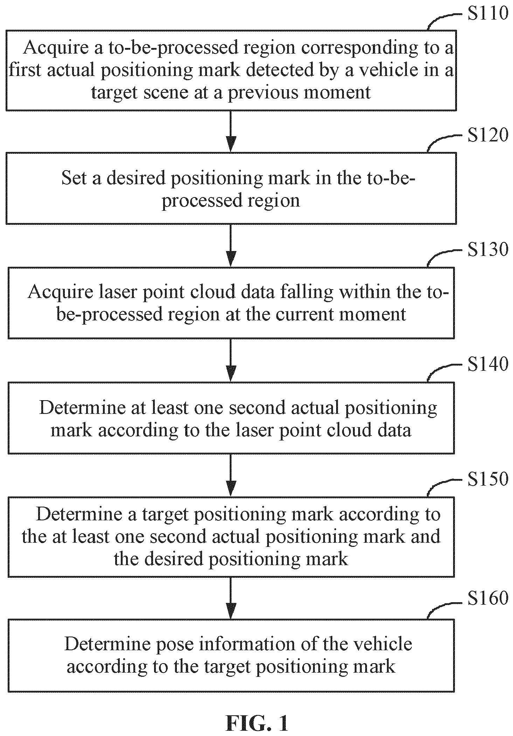

FIG. 1 is a schematic flowchart of a method for determining a vehicle pose according to an embodiment of the present disclosure. Embodiments of the present disclosure are applicable to a situation of determining a position and a pose of the vehicle. The method may be performed by an apparatus for determining a vehicle pose. The apparatus may be implemented in a form of software and/or hardware, and optionally, the apparatus may be implemented by using an electronic device. The electronic device may be a mobile terminal, a personal computer (PC) terminal, a server, and the like.

As shown in FIG. 1, the method includes the steps described below.

In S110, a to-be-processed region corresponding to a first actual positioning mark detected by a vehicle in a target scene at a previous moment is acquired.

The target scene may be understood as a working scene in which an engineering mechanical device performs the unmanned autonomous operation. The positioning mark may be understood as a key location in the actual working scene. In terms of a high-brightness reflective panel arranged for a lidar, the first actual positioning mark may be considered as a positioning mark detected by the vehicle at the previous moment in a practical application.

Optionally, acquiring the to-be-processed region corresponding to the first actual positioning mark detected by the vehicle in the target scene at the previous moment includes the following: acquiring vehicle positioning information at the previous moment and a set scan parameter of the lidar; acquiring the first actual positioning mark from a target scene map according to the vehicle positioning information and the set scan parameter; and determining the to-be-processed region according to the first actual positioning mark, where an area of the to-be-processed region is greater than an area of a plane in which the first actual positioning mark is located.

The vehicle positioning information may include position information and heading angle information of the vehicle in the target scene. The set scan parameter may include a set scan distance and a set scan angle. The target scene map may be a three-dimensional point cloud map pre-built through simultaneous localization and mapping (SLAM). The target scene map includes positioning information about positioning marks. The to-be-processed region may be understood as a region of interest (ROI).

In this embodiment, a SLAM system may acquire multiple first actual positioning marks from the target scene map by acquiring the vehicle positioning information at the previous moment and the set scan parameter. A corresponding to-be-processed region is generated for each first actual positioning mark, and the area of the to-be-processed region is greater than the area of the plane in which the first actual positioning mark is located, to ensure that laser point cloud data obtained at the current moment can fall within the to-be-processed region. In some embodiments, the area of the to-be-processed region is a set multiple of the area of the plane in which the first actual positioning mark is located, for example, the area of the to-be-processed region is 3 times or 5 times the area of the plane in which the first actual positioning mark is located.

In S 120, a desired positioning mark is set in the to-be-processed region.

In this embodiment, the SLAM system determines the to-be-processed region, and meanwhile, determines an attribute of a plane in which the desired positioning mark is located in each to-be-processed region. In this embodiment, the setting of the desired positioning mark in the to-be-processed region may be determined by those skilled in the art according to practical conditions and experience, which is not limited in this embodiment. For example, the setting of the desired positioning mark may be performed in the to-be-processed region, or at any position in the to-be-processed region according to historical empirical information of those skilled in the art. Optionally, the attribute of the plane in which the positioning mark is located includes a normal vector and a size. The normal vector is the normal vector of the plane on which the positioning mark is located, i.e., a vector represented by the straight line perpendicular to the plane. The size is the length and the width of the plane where the positioning mark is located. In this embodiment, the normal vector and the size are introduced so that when one or more second actual positioning marks exist in a single to-be-processed region, the accuracy, reliability and robustness of checking a target positioning mark can be effectively improved.

In S 130, laser point cloud data falling within the to-be-processed region at the current moment are acquired.

In some embodiments, all laser point cloud data at the current moment are acquired by using the lidar of the vehicle, and all the laser point cloud data acquired by the lidar are cropped according to the to-be-processed region to obtain the laser point cloud data (partial laser point cloud data) falling within the to-be-processed region.

In S 140, at least one second actual positioning mark in the to-be-processed region is determined according to the laser point cloud data falling within the to-be-processed region.

The first actual positioning mark and the second actual positioning mark are both formed by multiple pieces of laser point cloud data.

In this embodiment, laser point cloud data corresponding to one or more second actual positioning marks may be determined from the laser point cloud data by using a dynamic brightness threshold segmentation method.

Optionally, the manner of determining the at least one second actual positioning mark according to the laser point cloud data may include the following: setting a brightness threshold of the point cloud data; extracting foreground point cloud data from the laser point cloud data based on the brightness threshold; and determining the at least one second actual positioning mark according to the foreground point cloud data.

In this embodiment, the brightness threshold may be understood as a boundary line of the laser point cloud data, and is used for distinguishing a point cloud with brighter brightness from a point cloud with darker brightness, that is, the brightness threshold is used for dividing the laser point cloud data into two types of data, the foreground point cloud data and background point cloud data. The brightness threshold may be dynamically set according to practical conditions, which is not limited in this embodiment. For example, 1000 pieces of laser point cloud data may be divided into 200 pieces of foreground point cloud data and 800 pieces of background point cloud data by using the brightness threshold, or 700 pieces of laser point cloud data may be divided into 100 pieces of foreground point cloud data and 600 pieces of background point cloud data by using the brightness threshold. In this embodiment, the laser point cloud data may be divided into the foreground point cloud data and the background point cloud data by setting the brightness threshold of the point cloud data, and one or more second actual positioning marks are determined according to the foreground point cloud data.

Optionally, the manner of determining the at least one second actual positioning mark according to the foreground point cloud data may include clustering the foreground point cloud data according to a spatial distance to obtain the at least one second actual positioning mark.

In this embodiment, the foreground point cloud data may be clustered according to the spatial distance between the point cloud data by using a data clustering method such as the k-means method so that laser point cloud data close to each other may be divided into one type, and thus the foreground point cloud data may be divided into one or more types, that is, one or more second actual positioning marks (one type corresponds to one second actual positioning mark) may be obtained. A certain spatial distance exists between every two second actual positioning marks, and each second actual positioning mark has an independent spatial position (non-overlapping).

In this embodiment, the foreground point cloud data is clustered according to the spatial distance so that when multiple second actual positioning marks exist in the to-be-processed region, the multiple second actual positioning marks may be determined by separating the foreground point cloud data into independent multiple types of point cloud data, which can resolve a problem of false detection when multiple positioning marks coexist in the to-be-processed region due to the complex structure of the target scene.

In S 150, a target positioning mark is determined according to the at least one second actual positioning mark and the desired positioning mark.

In some embodiments, the at least one second actual positioning mark is separately compared with the desired positioning mark to obtain multiple comparison (error) results, the minimum comparison result is determined from the multiple comparison results, and a second actual positioning mark corresponding to the minimum comparison result is determined as the target positioning mark.

Optionally, the manner of determining the target positioning mark according to the at least one second actual positioning mark and the desired positioning mark may include the following: performing a plane fitting on laser point cloud data of each second actual positioning mark to obtain at least one second actual positioning mark plane; determining an attribute of each second actual positioning mark plane and an attribute of the plane in which the desired positioning mark is located; comparing the attribute of each second actual positioning mark plane with the attribute of the plane on which the desired positioning mark is located to obtain at least one comparison result; and determining the target positioning mark from the at least one second actual positioning mark according to the at least one comparison result.

In this embodiment, the plane fitting may be performed on the laser point cloud data of the second actual positioning mark to obtain a second actual positioning mark plane, the normal vector and the size of the second actual positioning mark plane are calculated, and the normal vector and the size of the plane in which the desired positioning mark is located are determined. In terms of the normal vector and the size, the multiple second actual positioning marks are separately compared with the desired positioning mark to obtain comparison results, and a second actual positioning mark with a smaller error from the desired positioning mark may be determined as the target positioning mark.

Optionally, the manner of comparing the attribute of each second actual positioning mark plane with the attribute of the plane on which the desired positioning mark is located to obtain the at least one comparison result may include the following: comparing the normal vector of each second actual positioning mark plane with the normal vector of the plane on which the desired positioning mark is located to obtain at least one first error result; comparing the size of each second actual positioning mark plane with the size of the plane on which the desired positioning mark is located to obtain at least one second error result; using the minimum value in the at least one first error result as a first minimum error result; and using the minimum value in the at least one second error result as a second minimum error result. Correspondingly, determining the target positioning mark from the at least one second actual positioning mark according to the at least one comparison result includes determining a second actual positioning mark corresponding to the first minimum error result and/or a second actual positioning mark corresponding to the second minimum error result as the target positioning mark.

In some embodiments, in terms of the normal vector, normal vectors of one or more second actual positioning mark planes may be separately compared with the normal vector of the plane on which the desired positioning mark is located, to obtain one or more first error results, and the minimum error in the one or more first error results is used as the first minimum error result. In terms of the size, sizes of one or more second actual positioning mark planes may be separately compared with the size of the plane in which the desired positioning mark is located, to obtain one or more second error results, and the minimum error of the one or more second error results is used as the second minimum error result. The second actual positioning mark corresponding to the first minimum error result and/or the second actual positioning mark corresponding to the second minimum error result is determined as the target positioning mark.

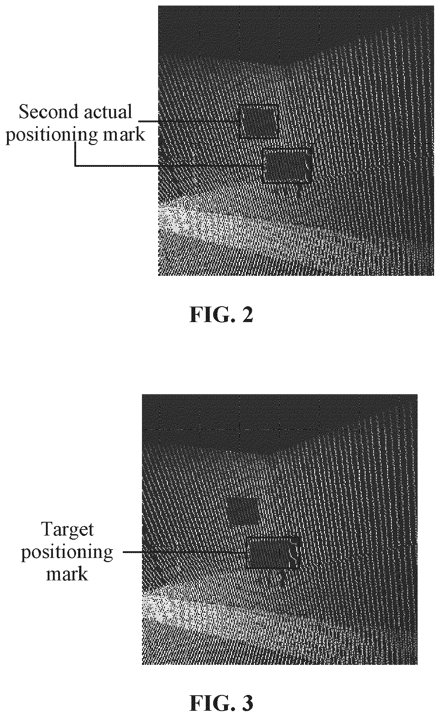

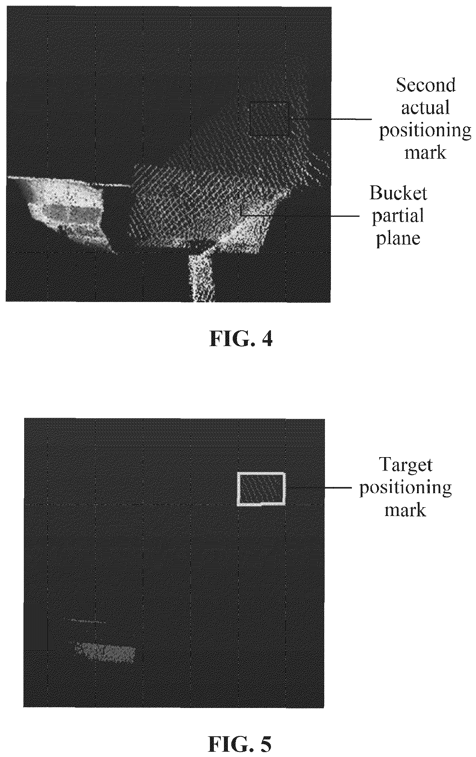

In this embodiment, the plane fitting is performed on the laser point cloud data of each independent second actual positioning mark to obtain the second actual positioning mark plane, the attribute of the second actual positioning mark plane is calculated and compared with the attribute of the plane in which the desired positioning mark is located, the second actual positioning mark with the minimum error result is used as the target positioning mark, and other non-target positioning marks or other similar interference planes are not output as a result, that is, the non-target positioning mark or other high reflective interference plane can be effectively suppressed. In this manner, the target positioning mark can be accurately detected, the problem of false detection caused by other dynamic high reflective planes close to the target positioning mark is effectively solved, and the target positioning mark can be detected accurately when multiple adjacent positioning marks are deployed in a single to-be-processed region under a complex scene. As shown in FIG. 2, FIG. 2 is a diagram illustrating multiple adjacent second actual positioning marks according to an embodiment of the present disclosure. Only two second actual positioning marks are shown in FIG. 2. FIG. 3 is a diagram illustrating a detection effect of a target positioning mark according to an embodiment of the present disclosure. As shown in FIG. 3, the desired target positioning mark (laser point cloud in the rectangular frame region) can be effectively and accurately detected by using the technical solutions in the embodiments of the present disclosure. FIG. 4 is a diagram illustrating a bucket partial plane appearing in a to-be-processed region according to an embodiment of the present disclosure. FIG. 5 is a diagram illustrating another detection effect of a target positioning mark according to an embodiment of the present disclosure. As shown in FIG. 5, the technical solutions in the embodiments of the present disclosure are adopted so that the interference can be effectively eliminated, and thus the target positioning mark (the rectangular frame region) can be accurately detected.

In S 160, pose information of the vehicle is determined according to the target positioning mark.

In some embodiments, a center point coordinate of the target positioning mark may be determined according to a cumulative averaging method, and the center point coordinate is used as a spatial position of the target positioning mark. The position information and the pose information of the vehicle are calculated according to the vehicle positioning information at the previous moment, the set scan parameter of the lidar, and the spatial position of the target positioning mark. In some embodiments, the calculation of the center point coordinate of the target positioning mark may be as follows: if three pieces of laser point cloud data of the target positioning mark are provided, and the three pieces of laser point cloud data may be represented as x1, y1, z1; x2, y2, z2; x3, y3, z3, respectively, the center point coordinate (x, y, z) is as follows: x = (x1 + x2 + x3)/3, y = (y1 + y2 + y3)/3, and z = (z1 + z2 + z3)/3.

According to the technical solutions of the embodiments of the present disclosure, the to-be-processed region corresponding to the first actual positioning mark detected by the vehicle in the target scene at the previous moment is acquired; the desired positioning mark is set in the to-be-processed region; the laser point cloud data falling within the to-be-processed region at the current moment is acquired; the at least one second actual positioning mark is determined according to the laser point cloud data; the target positioning mark is determined according to the at least one second actual positioning mark and the desired positioning mark; and the pose information of the vehicle is determined according to the target positioning mark. In the embodiments of the present disclosure, the at least one second actual positioning mark is determined through the laser point cloud data falling within the to-be-processed region, and the target positioning mark is determined according to the at least one second actual positioning mark and the desired positioning mark so that the detection effect of the positioning mark can be improved, thereby improving the positioning stability when the vehicle moves in the target scene. Moreover, the structure of the original SLAM system is not affected, the cost of the original SLAM system is not affected, no display operation is increased, and the detection is automatically completed by an algorithm program, thereby improving the detection efficiency.

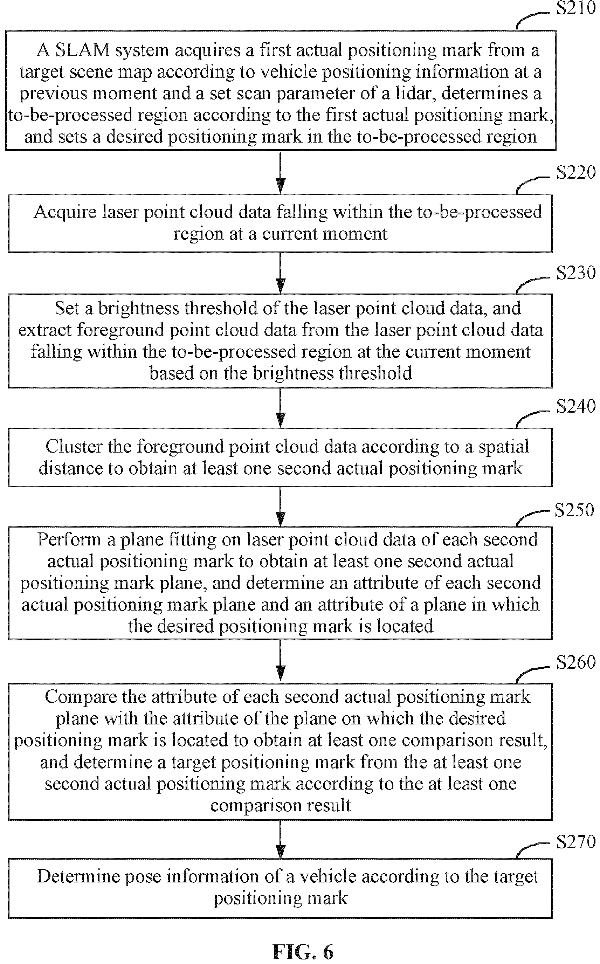

FIG. 6 is a flowchart of another method for determining a vehicle pose according to an embodiment of the present disclosure. The method includes steps described below.

In S210, a SLAM system acquires a first actual positioning mark from a target scene map according to vehicle positioning information at a previous moment and a set scan parameter of a lidar, determines a to-be-processed region according to the first actual positioning mark, and sets a desired positioning mark in the to-be-processed region.

In S220, laser point cloud data falling within the to-be-processed region at the current moment are acquired.

In S230, a brightness threshold of the point cloud data is set, and foreground point cloud data is extracted from the laser point cloud data falling into the to-be-processed region at the current moment based on the brightness threshold.

In S240, the foreground point cloud data is clustered according to a spatial distance to obtain at least one second actual positioning mark.

In S250, a plane fitting is performed on laser point cloud data of each second actual positioning mark to obtain at least one second actual positioning mark plane, and an attribute of each second actual positioning mark plane and an attribute of a plane in which the desired positioning mark is located are determined.

In S260, the attribute of each second actual positioning mark plane is compared with the attribute of the plane on which the desired positioning mark is located to obtain at least one comparison result, and a target positioning mark is determined from the at least one second actual positioning mark according to the at least one comparison result.

In S270, pose information of a vehicle is determined according to the target positioning mark.

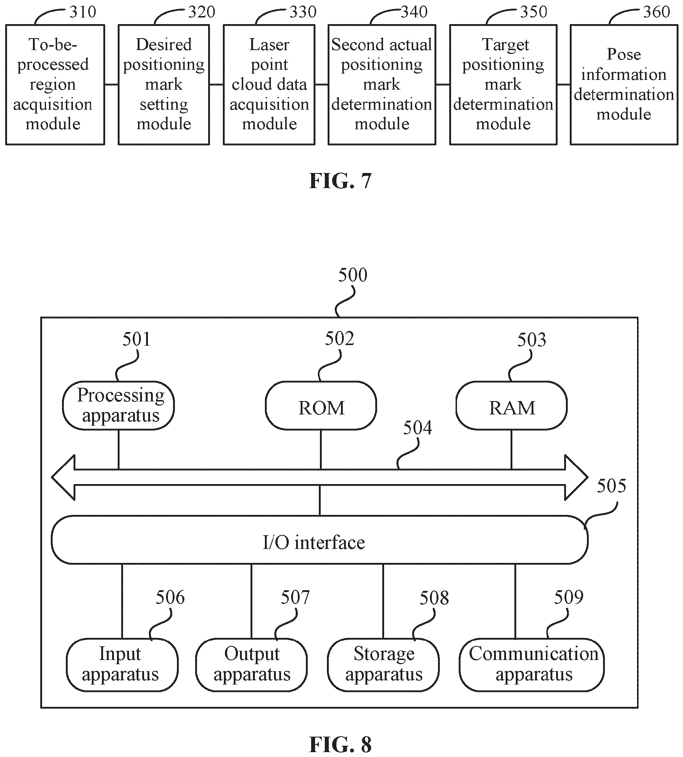

FIG. 7 is a schematic structural diagram of an apparatus for determining a vehicle pose according to an embodiment of the present disclosure. As shown in FIG. 7, the apparatus includes a to-be-processed region acquisition module 310, a desired positioning mark setting module 320, a laser point cloud data acquisition module 330, a second actual positioning mark determination module 340, a target positioning mark determination module 350 and a pose information determination module 360.

The to-be-processed region acquisition module 310 is configured to acquire a to-be-processed region corresponding to a first actual positioning mark detected by a vehicle in a target scene at a previous moment. The desired positioning mark setting module 320 is configured to set a desired positioning mark in the to-be-processed region. The laser point cloud data acquisition module 330 is configured to acquire laser point cloud data falling within the to-be-processed region at a current moment. The second actual positioning mark determination module 340 is configured to determine at least one second actual positioning mark according to the laser point cloud data. The target positioning mark determination module 350 is configured to determine a target positioning mark according to the at least one second actual positioning mark and the desired positioning mark. The pose information determination module 360 is configured to determine pose information of the vehicle according to the target positioning mark.

In the technical solutions of the embodiments of the present disclosure, the to-be-processed region acquisition module is configured to acquire the to-be-processed region corresponding to the first actual positioning mark detected by the vehicle in the target scene at the previous moment, the desired positioning mark setting module is configured to set the desired positioning mark in the to-be-processed region, the laser point cloud data acquisition module is configured to acquire the laser point cloud data falling within the to-be-processed region at the current moment, the second actual positioning mark determination module is configured to determine the at least one second actual positioning mark according to the laser point cloud data, the target positioning mark determination module is configured to determine the target positioning mark according to the at least one second actual positioning mark and the desired positioning mark, and the pose information determination module is configured to determine the pose information of the vehicle according to the target positioning mark. In the embodiments of the present disclosure, the at least one second actual positioning mark is determined through the laser point cloud data falling within the to-be-processed region, and the target positioning mark is determined according to the at least one second actual positioning mark and the desired positioning mark. In this manner, the detection effect of the positioning mark can be improved, thereby improving the positioning stability when the vehicle moves in the target scene.

Optionally, the to-be-processed region acquisition module 310 is configured to acquire vehicle positioning information at the previous moment and a set scan parameter of a lidar; acquire the first actual positioning mark from a target scene map according to the vehicle positioning information and the set scan parameter; and determine the to-be-processed region according to the first actual positioning mark, where an area of the to-be-processed region is greater than an area of a plane in which the first actual positioning mark is located.

Optionally, the second actual positioning mark determination module 340 is configured to set a brightness threshold of the point cloud data; extract foreground point cloud data from the laser point cloud data based on the brightness threshold; and determine the at least one second actual positioning mark according to the foreground point cloud data.

Optionally, the second actual positioning mark determination module 340 is configured to determine the at least one second actual positioning mark according to the foreground point cloud data in a manner of clustering the foreground point cloud data according to a spatial distance to obtain the at least one second actual positioning mark.

Optionally, the target positioning mark determination module 350 is configured to perform a plane fitting on laser point cloud data of each second actual positioning mark of the at least one second actual positioning mark to obtain at least one second actual positioning mark plane; determine an attribute of each second actual positioning mark plane of the at least one second actual positioning mark plane and an attribute of a plane in which the desired positioning mark is located; compare the attribute of each second actual positioning mark plane with the attribute of the plane on which the desired positioning mark is located to obtain at least one comparison result; and determine the target positioning mark from the at least one second actual positioning mark according to the at least one comparison result.

Optionally, both the attribute of each second actual positioning mark plane and the attribute of the plane on which the desired positioning mark is located include a normal vector and a size.

Optionally, the target positioning mark determination module 350 is configured to obtain the at least one comparison result in the following manner of comparing the normal vector of each second actual positioning mark plane with the normal vector of the plane on which the desired positioning mark is located to obtain at least one first error result; comparing the size of each second actual positioning mark plane with the size of the plane on which the desired positioning mark is located to obtain at least one second error result; using the minimum value in the at least one first error result as a first minimum error result; and using the minimum value in the at least one second error result as a second minimum error result.

Optionally, the target positioning mark determination module 350 is configured to determine the target positioning mark from the at least one second actual positioning mark according to the at least one comparison result in a manner of determining a second actual positioning mark corresponding to the first minimum error result and/or a second actual positioning mark corresponding to the second minimum error result as the target positioning mark.

The apparatus provided in the embodiments of the present disclosure may perform the method for determining a vehicle pose provided in any of the embodiments of the present disclosure, and have corresponding function modules and effects for executing the method.

It is worth noting that the units and the modules included in the above-described apparatus are only divided according to the function logic and are not limited to the above-described division, as long as the corresponding functions can be implemented. In addition, specific names of the function units are also merely to facilitate distinguishing from each other and are not intended to limit the scope of protection of the embodiments of the present disclosure.

FIG. 8 is a schematic structural diagram of an electronic device according to an embodiment of the present disclosure. Referring to FIG. 8, FIG. 8 shows a schematic structural diagram of an electronic device (such as a terminal device or a server) 500 adapted to implement the embodiments of the present disclosure. The terminal device in the embodiments of the present disclosure may include, but is not limited to, a mobile terminal such as a mobile phone, a notebook computer, a digital broadcasting receiver, a personal digital assistant (PDA) a pad, a portable media player (PMP) and an in-vehicle terminal (such as an in-vehicle navigation terminal), and a fixed terminal such as a television (TV) and a desktop computer. The electronic device 500 shown in FIG. 8 is merely an example and should not impose any limitation on the functions and the scope of use of the embodiments of the present disclosure.

As shown in FIG. 8, the electronic device 500 may include a processing apparatus (such as a central processing unit and a graphics processing unit) 501, the processing apparatus 501 may perform various appropriate actions and processes according to a program stored in a read-only memory (ROM) 502 or a program loaded from a storage apparatus 508 into a random access memory (RAM) 503. The RAM 503 may also store programs and data required for an operation of the electronic device 500. The processing apparatus 501, the ROM 502 and the RAM 503 are connected to each other by using a bus 504. An input/output (I/O) interface 505 is also connected to the bus 504.

Generally, the following apparatuses may be connected to the I/O interface 505: an input apparatus 506 such as a touchscreen, a touchpad, a keyboard, a mouse, a camera, a microphone, an accelerometer, and a gyroscope; an output apparatus 507 such as a liquid crystal display (LCD), a loudspeaker and a vibrator; a storage apparatus 508 such as a magnetic tape and a hard disk; and a communication apparatus 509. The communication apparatus 509 may allow the electronic device 500 to perform wireless or wired communications with other devices to exchange data.

According to embodiments of the present disclosure, the process described above with reference to the flowcharts may be implemented as a computer software program. For example, the embodiments of the present disclosure include a computer program product, the computer program product includes a computer program carried on a non-transient computer-readable medium, and the computer program includes a program code used for executing the methods shown in the flowcharts. In such an embodiment, the computer program may be downloaded and installed from a network through the communication apparatus 509, installed from the storage apparatus 508, or installed from the ROM 502. The computer program, when executed by the processing apparatus 501, performs the above-described functions defined in the methods in the embodiments of the present disclosure.

The names of messages or information interacted between apparatuses in the embodiments of the present disclosure are for illustrative purposes only, and are not intended to limit the scope of such messages or information.

The electronic device 500 provided in the embodiments of the present disclosure belongs to the same inventive concept as the method for determining a vehicle pose provided in the above-described embodiments. Technical details that are not described in detail in this embodiment may be referred to the above-described embodiments, and this embodiment has the same effect as the above-described embodiments.

Embodiments of the present disclosure provide a computer storage medium. The computer storage medium stores a computer program, where the program, when executed by a processor, implements the method for determining a vehicle pose provided in the above-described embodiments.

The above-described computer-readable medium of the present disclosure may be a computer-readable signal medium, or a computer-readable storage medium, or any combination of the computer-readable signal medium and the computer-readable storage medium. The computer-readable storage medium may be, for example, but not limited to, an electronic, magnetic, optical, electromagnetic, infrared, or semiconductor system, apparatus, or device, or any combination thereof. The computer-readable storage medium may include, but is not limited to: electrical connections with one or more wires, a portable computer magnetic disk, a hard disk, a RAM, a ROM, an erasable programmable read-only memory (EPROM) (or a flash), an optical fiber, a compact disc read-only memory (CD-ROM), an optical storage device, a magnetic storage device, or any suitable combination thereof. In the present disclosure, the computer-readable storage medium may be any tangible medium that contains or stores a program, and the program may be used by or in combination with an instruction execution system, apparatus, or device. In the present disclosure, the computer-readable signal medium may include a data signal that is contained in a baseband or propagated as a part of a carrier wave, and the data signal carries a computer-readable program code. Such a propagated data signal may take many forms, including, but not limited to, an electromagnetic signal, an optical signal, or any suitable combination thereof. The computer-readable signal medium may also be any computer-readable medium other than the computer-readable storage medium, and the computer-readable signal medium may send, propagate, or transmit a program for being used by or in combination with the instruction execution system, apparatus, or device. The program code contained in the computer-readable medium may be transmitted by using any appropriate medium, including, but not limited to, an electric wire, an optical cable, a radio frequency (RF), etc., or any suitable combination thereof.

In some embodiments, clients and servers may communicate by using any currently known or future developed network protocol, such as Hypertext Transfer Protocol (HTTP) and may be interconnected with any form or medium of digital data communication (such as, a communication network). Examples of the communication network include a local area network (LAN), a wide area network (WAN), an Internet work (such as the Internet), a peer-to-peer network (such as ad hoc peer-to-peer network), and any currently known or future developed networks.

The computer-readable medium described above may be a medium included in the above-described electronic device 500, or may exist separately without being assembled into the electronic device 500.

The computer-readable medium described above carries one or more programs. The one or more programs, when executed by the electronic device 500, cause the electronic device 500 to acquire a to-be-processed region corresponding to a first actual positioning mark detected by a vehicle in a target scene at a previous moment; set a desired positioning mark in the to-be-processed region; acquire laser point cloud data falling within the to-be-processed region at a current moment; determine at least one second actual positioning mark according to the laser point cloud data; determine a target positioning mark according to the at least one second actual positioning mark and the desired positioning mark; and determine pose information of the vehicle according to the target positioning mark.

A computer program code for performing the operations of the present disclosure may be written in one or more programming languages, the above-described programming languages include, but not limited to, an object-oriented programming language-such as Java, Smalltalk, C++, and further include a conventional procedural programming language-such as a "C" language or similar programming language. The program code may be executed in the following manners: executed entirely on a user's computer, executed partly on the user's computer, executed as an independent software package, executed partly on the user's computer and partly on a remote computer, or executed entirely on the remote computer or a server. In a case where the remote computer is involved, the remote computer may be connected to the user's computer through any kind of network, including a local area network (LAN), or a wide area network (WAN), or may be connected to an external computer (for example, connected to the external computer through an internet provided by an internet service provider).

The flowchart and block diagram in the drawings illustrate the architecture, functionality, and operation of possible implementations of the system, the method and the computer program product according to the embodiments of the present disclosure. In this regard, each block in the flowchart or block diagram may represent a module, a program segment, or a part of codes, which includes one or more executable instructions for implementing a specified logical function. It is also to be noted that, in some alternative implementations, the functions noted in the blocks may occur out of the order noted in the drawings. For example, two blocks shown in succession may, in fact, be executed substantially concurrently, or the two blocks may sometimes be executed in a reverse order, which depends upon the involved functionality. It is also to be noted that each block of the block diagram and/or the flowchart, and combinations of blocks of the block diagram and/or the flowchart, may be implemented by a dedicated hardware-based system that performs a specified function or operation, or by a combination of dedicated hardware and a computer instruction.

The unit described in the embodiments of the present disclosure may be implemented by software or hardware. The name of the unit does not constitute a limitation on the unit itself in some cases. For example, a first acquisition unit may also be described as "a unit for acquiring the at least two Internet protocol addresses".

The functions described above herein may be performed, at least in part, by one or more hardware logic components. For example, without limitation, exemplary types of hardware logic components that may be used include a field-programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program available for an instruction execution system, apparatus or device or a program used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any appropriate combination of the foregoing. The machine-readable storage medium may include an electrical connection based on one or more wires, a portable computer diskette, a hard disk, a RAM, a ROM, an EPROM or a flash memory, an optical fiber, a CD-ROM, an optical storage device, a magnetic storage device, or any appropriate combination of the foregoing.

## Claims

1. A method for determining a vehicle pose, comprising:
acquiring a to-be-processed region corresponding to a first actual positioning mark detected by a vehicle in a target scene at a previous moment;
setting a desired positioning mark in the to-be-processed region;
acquiring laser point cloud data falling within the to-be-processed region at a current moment;
determining at least one second actual positioning mark according to the laser point cloud data;
determining a target positioning mark according to the at least one second actual positioning mark and the desired positioning mark; and
determining pose information of the vehicle according to the target positioning mark.

2. The method of claim 1, wherein acquiring the to-be-processed region corresponding to the first actual positioning mark detected by the vehicle in the target scene at the previous moment comprises:
acquiring vehicle positioning information at the previous moment and a set scan parameter of a lidar;
acquiring the first actual positioning mark from a target scene map according to the vehicle positioning information and the set scan parameter; and
determining the to-be-processed region according to the first actual positioning mark, wherein an area of the to-be-processed region is greater than an area of a plane in which the first actual positioning mark is located.

3. The method of claim 1, wherein determining the at least one second actual positioning mark according to the laser point cloud data comprises:
setting a brightness threshold of the point cloud data;
extracting foreground point cloud data from the laser point cloud data based on the brightness threshold; and
determining the at least one second actual positioning mark according to the foreground point cloud data.

4. The method of claim 3, wherein determining the at least one second actual positioning mark according to the foreground point cloud data comprises:
clustering the foreground point cloud data according to a spatial distance to obtain the at least one second actual positioning mark.

5. The method of claim 1, wherein determining the target positioning mark according to the at least one second actual positioning mark and the desired positioning mark comprises:
performing a plane fitting on laser point cloud data of each second actual positioning mark of the at least one second actual positioning mark to obtain at least one second actual positioning mark plane;
determining an attribute of each second actual positioning mark plane of the at least one second actual positioning mark plane and an attribute of a plane in which the desired positioning mark is located;
comparing the attribute of each second actual positioning mark plane with the attribute of the plane on which the desired positioning mark is located to obtain at least one comparison result; and
determining the target positioning mark from the at least one second actual positioning mark according to the at least one comparison result.

6. The method of claim 5, wherein each of the attribute of each second actual positioning mark plane and the attribute of the plane on which the desired positioning mark is located comprises a normal vector and a size.

7. The method of claim 6, wherein comparing the attribute of each second actual positioning mark plane with the attribute of the plane on which the desired positioning mark is located to obtain the at least one comparison result comprises:
comparing the normal vector of each second actual positioning mark plane with the normal vector of the plane on which the desired positioning mark is located to obtain at least one first error result;
comparing the size of each second actual positioning mark plane with the size of the plane on which the desired positioning mark is located to obtain at least one second error result;
using a minimum value in the at least one first error result as a first minimum error result; and
using a minimum value in the at least one second error result as a second minimum error result;
wherein determining the target positioning mark from the at least one second actual positioning mark according to the at least one comparison result comprises:
determining at least one of a second actual positioning mark corresponding to the first minimum error result or a second actual positioning mark corresponding to the second minimum error result as the target positioning mark.

8. An apparatus for determining a vehicle pose, comprising:
a to-be-processed region acquisition module, which is configured to acquire a to-be-processed region corresponding to a first actual positioning mark detected by a vehicle in a target scene at a previous moment;
a desired positioning mark setting module, which is configured to set a desired positioning mark in the to-be-processed region;
a laser point cloud data acquisition module, which is configured to acquire laser point cloud data falling within the to-be-processed region at a current moment;
a second actual positioning mark determination module, which is configured to determine at least one second actual positioning mark according to the laser point cloud data;
a target positioning mark determination module, which is configured to determine a target positioning mark according to the at least one second actual positioning mark and the desired positioning mark; and
a pose information determination module, which is configured to determine pose information of the vehicle according to the target positioning mark.

9. An electronic device, comprising:
at least one processor; and
a storage apparatus configured to store at least one program;
wherein the at least one program, when executed by the at least one processor, causes the at least one processor to implement the method for determining a vehicle pose of any one of claims 1 to 7.

10. A storage medium, comprising a computer-executable instruction, wherein the computer-executable instruction is configured to perform, when executed by a computer processor, the method for determining a vehicle pose of any one of claims 1 to 7.
